# FASCICULE DE BREVET EUROPEEN

(11) **EP 2 421 641 B1**
(45) Date de publication et mention de la délivrance du brevet: **02.10.2013**
(21) Numéro de dépôt: 10714021.2
(22) Date de dépôt: 21.04.2010
(51) Int. Cl.: B01J 19/24, C01B 3/38

(54) **DISPOSITIF DE REFORMAGE CATALYTIQUE ET PROCEDE DE FABRICATION**
VORRICHTUNG ZUR KATALYTISCHEN REFORMIERUNG UND HERSTELLUNGSVERFAHREN
DEVICE FOR CATALYTIC REFORMING AND MANUFACTURING METHOD

(30) Priorité: 21.04.2009 FR 0952595
(43) Date de publication de la demande: 29.02.2012
(73) Titulaire: Institut Régional des Matériaux Avancés (IRMA), 56270 Ploemeur (FR); Syngas, 44320 Saint Viaud (FR)
(72) Inventeur: GATEAU, Paul, F-44640 Saint-Jean de Boiseau (FR); HAMON, Christian, F-44600 Saint-Nazaire (FR)
(74) Mandataire: Regimbeau
(86) Numéro de dépôt international: PCT/EP2010/055303
(87) Numéro de publication internationale: WO 2010/122077

(56) Documents cités:
- EP-A- 0 967 174
- EP-A- 1 645 316
- US-A1- 2004 154 222
- US-A1- 2005 282 051

## Description

### DOMAINE TECHNIQUE GENERAL

La présente invention concerne le reformage catalytique d'hydrocarbures.

Plus précisément, elle concerne un dispositif de reformage catalytique comprenant au moins deux modules de reformage catalytique, et un procédé de fabrication du dispositif de reformage catalytique.

### ETAT DE L'ART

La transformation d'hydrocarbures en hydrogène est un procédé connu de l'art antérieur.

Pour ce faire, on procède à une étape de reformage pour convertir les hydrocarbures en un mélange d'hydrogène, de monoxyde de carbone, de dioxyde de carbone, de vapeur d'eau et de composés gazeux combustibles résiduels.

Sans catalyseur, cette étape est réalisée à très haute température, typiquement au-delà de 1300 °C. L'ajout d'un catalyseur permet de réaliser le reformage à une température inférieure à 1000°C.

On s'intéresse dans la suite au reformage catalytique, généralement distingué en deux classes :
- le reformage à la vapeur (ou SR pour « steam reforming » en terminologie anglo-saxonne), dans lequel un mélange d'hydrocarbures et de vapeur d'eau est envoyé dans un réacteur catalytique chauffé par échange thermique, et
- le reformage autotherme (ou ATR pour « autothermal reforming » en terminologie anglo-saxonne), dans lequel un mélange d'hydrocarbures, d'oxydant et de vapeur d'eau est envoyé dans un réacteur catalytique. L'oxydant est généralement composé d'air et/ou d'oxygène, et apporte - par réaction exothermique - la chaleur nécessaire au reformage. Lorsque la teneur en vapeur est faible, le réacteur porte généralement le nom de CPOX (pour catalytical partial oxydation en terminologie anglo-saxonne).

Pour assurer un bon rendement de production d'hydrogène d'une unité de reformage, il est nécessaire d'ajouter des moyens d'échanges thermiques adaptés au procédé, pour ne pas perdre en sortie l'énergie apportée.

Les unités de grande capacité de production - par exemple dans l'industrie de synthèse de carburant, de méthanol, ou d'ammoniac - sont ainsi optimisées en fonction de leur débit de production.

Pour les unités à faible capacité de production - par exemple pour l'alimentation de piles à combustible à hydrogène, que ce soit celles avec membranes à échange de protons ou les piles à oxyde solide - une étude d'optimisation en fonction du débit est moins intéressante ; il serait plutôt souhaitable de disposer d'un module optimisé pouvant produire un débit de référence, l'association de plusieurs modules permettant de produire le débit souhaité.

Le brevet US 6 447 736 décrit un dispositif de reformage à la vapeur comprenant un réacteur catalytique modulaire, inspiré du principe des échangeurs à plaque.

Ce dispositif présente cependant des inconvénients.

Il est conçu pour le reformage du méthanol qui s'effectue à température plus basse que le reformage d'hydrocarbures. Or, les volumes de catalyseur requis par le reformage à la vapeur d'hydrocarbures sont généralement importants et nécessitent, dans le cas de ce réacteur catalytique de l'art antérieur, beaucoup de plaques dont l'assemblage étanche résistant à la température est coûteux.

D'autre part ce dispositif n'est pas adapté au reformage autotherme.

Les meilleurs réacteurs catalytiques sont actuellement réalisés en nids-d'abeilles métalliques. On entend par « nids-d'abeilles » une superposition de feuillards ondulés et/ou plats. Après fabrication, le nid-d'abeilles vierge est enduit d'un catalyseur.

Les procédés actuels pour déposer le catalyseur obligent à limiter la taille des nids-d'abeilles si bien qu'il faut procéder à du soudage ou du brasage, ce qui comporte des risques de dégradation de la qualité du réacteur, en particulier:
- en portant le catalyseur à des températures trop élevées, ce qui dégrade son effet sur la réaction de reformage,
- en introduisant des impuretés dans le milieu catalytique.

### PRESENTATION DE L'INVENTION

L'invention propose de pallier au moins un de ces inconvénients.

L'invention propose selon un premier aspect un dispositif de reformage d'hydrocarbures catalytique pour convertir des hydrocarbures en un produit comprenant de l'hydrogène selon la revendication 1.

Le dispositif selon le premier aspect de l'invention est avantageusement complété par les caractéristiques suivantes, prises seules ou en une quelconque de leurs combinaisons techniquement possibles :
- chaque module comprend une surface inférieure et/ou une surface supérieure de la zone de chauffage, le circuit caloporteur comprenant un ensemble de nids-d'abeilles, chacun disposé au contact d'une surface supérieure ou d'une surface inférieure de la zone de chauffage d'un module de reformage catalytique,
- chaque module comprend une surface inférieure et/ou une surface supérieure de la zone de refroidissement, le circuit frigoporteur comprenant un ensemble de nids-d'abeilles, chacun disposé au contact d'une surface supérieure ou d'une surface inférieure de la zone de refroidissement d'un module de reformage catalytique,
- le boitier comprend en outre, pour chaque module de reformage catalytique, une voie d'entrée auxiliaire destinée à recevoir un flux d'eau connectée à une entrée du module de reformage catalytique,
- le catalyseur est un catalyseur spécifique SR, le circuit caloporteur étant en outre destiné à mettre en contact un fluide caloporteur avec une surface extérieure de la zone de reformage de chaque module de reformage catalytique, pour réaliser un reformage catalytique à la vapeur, et
- le catalyseur est un catalyseur spécifique ATR, les voies d'entrée étant en outre destinées à recevoir un flux d'air, pour réaliser un reformage catalytique autotherme.

Les modules (10a, 10b, 10c) de reformage catalytique comprennent chacun une entrée (11') auxiliaire destinée à recevoir un flux d'eau, le nid-d'abeilles (16) de chauffage comprenant des moyens permettant un mélange entre les flux d'eau et d'hydrocarbures au niveau de la zone (13) de chauffage.

>

L'invention propose aussi, selon un deuxième aspect, un procédé de fabrication du dispositif selon le premier aspect de l'invention.

L'invention présente de nombreux avantages.

L'invention permet d'intégrer la technologie du nid-d'abeilles à un dispositif de reformage catalytique sans soudure au niveau du catalyseur, en intégrant en outre dans un même boitier compact les circuits caloporteur et frigoporteur et les modules de reformage catalytique.

L'invention permet également de fabriquer un dispositif de reformage catalytique optimisé dont le nombre de modules est choisi en fonction d'un débit de production souhaité.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 représente un module de reformage catalytique,
- les figures 2a et 2b représentent des nids-d'abeilles du module de reformage catalytique,
- la figure 3 représente, sous la forme d'un schéma bloc, un procédé de fabrication d'un module de reformage catalytique
- les figures 4a et 4b représentent un boitier vide destiné à faire partie d'un dispositif de reformage catalytique selon une réalisation possible du premier aspect de l'invention,
- les figures 5a et 5b représentent un boitier dans lequel sont disposés des modules de reformage catalytique selon le premier aspect de l'invention,
- les figures 6a à 6c représentent respectivement en coupe de face et de dessus un dispositif de reformage catalytique selon une réalisation possible du premier aspect de l'invention, et
- la figure 7 représente, sous la forme d'un schéma bloc, un procédé de fabrication d'un dispositif de reformage catalytique conformément à une réalisation possible du second aspect de l'invention.

### DESCRIPTION DETAILLEE

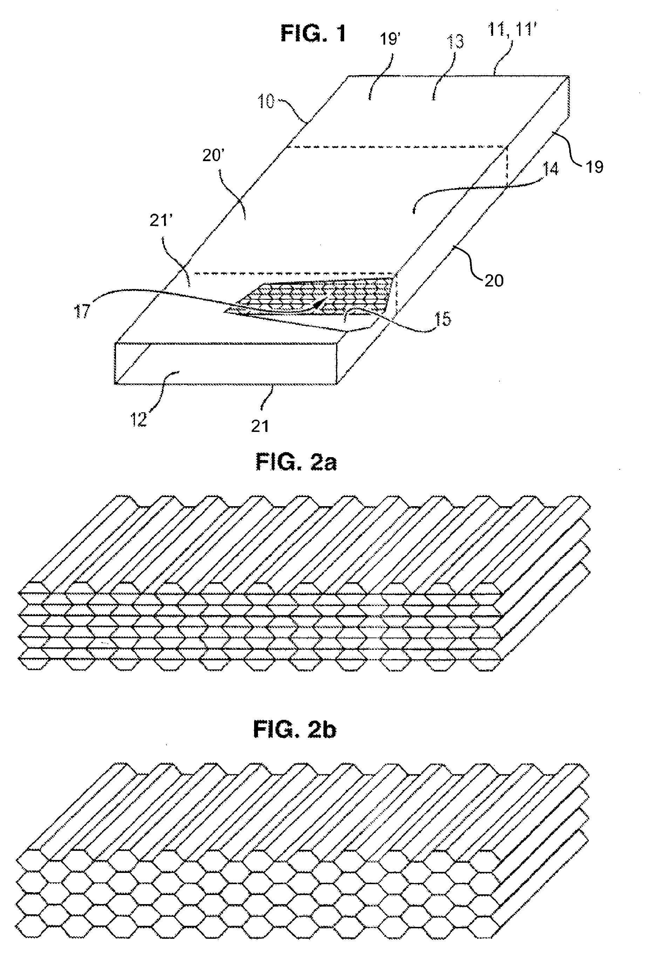

En référence à la figure 1, un module 10 de reformage catalytique pour convertir des hydrocarbures en un produit comprenant de l'hydrogène comprend une entrée 11 destinée à recevoir un flux d'hydrocarbures et une sortie 12 destinée à évacuer un flux de produit.

Par « produit comprenant de l'hydrogène », on entend, au sens de la présente invention, un fluide gazeux comprenant un mélange d'hydrogène, de vapeur d'eau, de monoxyde de carbone, de dioxyde de carbone et de composés gazeux combustibles résiduels, l'hydrogène représentant le composé majoritaire de ce mélange. Ce produit pourra comprendre en particulier entre 20 % et 70% en volume d'hydrogène.

Le terme « produit » sera utilisé de manière équivalente au terme « produit comprenant de l'hydrogène » dans le cadre de la présente invention.

Les hydrocarbures sont convertis en produit contenant de l'hydrogène au niveau d'une zone 14 de reformage située sensiblement au milieu du module 10, et dans laquelle est disposé un nid-d'abeilles 17 de reformage comportant un catalyseur.

Le catalyseur est choisi en fonction du type de réaction envisagé dans la zone 14. On distinguera en particulier les catalyseurs spécifiques SR, utilisés pour un reformage catalytique à la vapeur, et les catalyseurs spécifiques ATR, utilisés pour un reformage catalytique autotherme.

Les catalyseurs utilisés dans le cadre de la présente invention sont bien connus dans l'art antérieur et peuvent comporter du nickel ou des métaux précieux comme le rhodium, le ruthénium, le platine, le palladium ou le rhénium. Ces métaux peuvent être formulés en présence d'alumine, de magnésie, de zircone, d'oxyde de cérium, etc.

Préférentiellement, le nid-d'abeilles 17 de reformage comprend un empilement de feuillards métalliques ondulés superposés, séparés ou non par des feuillards plats comme représentés sur les figures 2a et 2b. L'épaisseur des feuillards est, par exemple, comprise entre 50 microns et 250 microns, et la densité du nid-d'abeilles 17 peut être de 200 à 600 cpsi (pour « cell per square inch » ou cellule par pouce carré en terminologie anglo-saxonne).

Les feuillards peuvent être composés d'un alliage contenant du fer, du chrome et/ou de l'aluminium ou encore du nickel et autres composés présents dans les aciers. A titre d'exemple non limitatif, les feuillards du nid-d'abeilles 17 peuvent être composés de l'alliage WN 1.4767, ou de tout autre alliage connu de l'homme de l'art.

La réaction de reformage nécessite une température importante, généralement d'au moins 400°C et notamment d'au maximum 850 °C. Le module selon le premier aspect comprend ainsi une zone 13 de chauffage, adjacente à l'entrée 11, dans laquelle est disposé un nid-d'abeilles 16 de chauffage.

Le module est destiné à recevoir un apport calorifique au niveau d'une surface extérieure (19, 19') de la zone 13 de chauffage, pour que les réactifs soient portés à température nécessaire au démarrage de la réaction, par exemple environ 400°C.

Pour cela, la surface extérieure de la zone 13 de chauffage pourra être mise en contact avec un circuit caloporteur comprenant un fluide caloporteur.

Des exemples non limitatifs de nid-d'abeilles 16 de chauffage sont représentés sur les figures 2a et 2b. Ce nid-d'abeilles 16 peut comprendre des feuillards métalliques ondulés superposés, séparés ou non par des feuillards plats, d'une épaisseur pouvant aller de 50 microns à 300 microns. Le nid-d'abeilles 16 peut présenter, par exemple, une densité de 50 à 400 cpsi.

Le nid-d'abeilles 16 permet un bon transfert de chaleur entre l'extérieur, et notamment le fluide caloporteur du circuit caloporteur, et le flux d'hydrocarbures destiné à circuler à l'intérieur en jouant un rôle d'ailette interne.

Dans le cas d'un reformage catalytique à la vapeur, un apport calorifique au niveau de la zone 14 de reformage est nécessaire. La surface extérieure (20, 20') de la zone 14 de reformage pourra donc dans ce cas être mise en contact avec un circuit caloporteur comprenant un fluide caloporteur. Ce fluide caloporteur pourra être le même que celui utilisé pour chauffer la zone 13.

Une telle mise en oeuvre n'est pas nécessaire pour réaliser un reformage autotherme qui ne nécessite pas d'apport calorifique supplémentaire. La voie d'entrée 11 pourra alors recevoir un flux d'air, réactif nécessaire au reformage autotherme. Le flux d'air peut aussi être mélangé en amont au flux d'hydrocarbure ou au flux d'eau. L'air peut être également enrichi en oxygène.

En outre, il est préférable de refroidir le produit avant de réaliser une nouvelle réaction dite de shift (CO +H2O → CO2 + H2) pour compléter la conversion en hydrogène à partir de CO et d'eau. Le module 10 selon le premier aspect de l'invention comprend ainsi une zone 15 de refroidissement, adjacente à la sortie 12, dans laquelle est disposé un nid-d'abeilles 18 de refroidissement.

Le module est destiné à recevoir un apport frigorifique au niveau d'une surface extérieure (21, 21') de la zone 15 de refroidissement, de sorte à refroidir le flux de produit en sortie.

Pour cela, la surface extérieure de la zone 15 de chauffage pourra être mise en contact avec un circuit frigoporteur comprenant un fluide frigoporteur.

Des exemples non limitatifs de nid-d'abeilles 18 de refroidissement sont représentés sur les figures 2a et 2b. Ce nid-d'abeilles 18 peut comprendre une superposition de feuillards ondulés superposés, éventuellement séparés par des feuillards plats. Le nid-d'abeilles 18 présente, par exemple, une densité de 50 à 400 cpsi.

De même, le nid-d'abeilles 18 permet un bon transfert de chaleur entre l'extérieur, et notamment le fluide frigoporteur du circuit frigoporteur, et le flux de produit destiné à circuler à l'intérieur en jouant un rôle d'ailette interne.

La zone 14 de reformage est comprise entre la zone 13 de chauffage et la zone 15 de refroidissement.

Le flux d'hydrocarbures contient des hydrocarbures et éventuellement de l'eau, réactif nécessaire au reformage.

Selon un mode de réalisation avantageux le module 10 comprend une entrée 11' auxiliaire destinée à recevoir un flux d'eau.

Préférentiellement - mais non limitativement - le nid-d'abeilles 16 de chauffage comprend alors deux structures distinctes faisant face respectivement à l'entrée 11 et à l'entrée 11' et séparées par un feuillard plat. Les deux structures peuvent comprendre des feuillards de géométrie et d'épaisseur différente.

Ainsi, il n'est pas nécessaire de mélanger les flux d'eau et d'hydrocarbure en amont.

Le nid-d'abeilles 16 de chauffage comprend alors des moyens permettant un mélange entre les flux d'eau et d'hydrocarbure au niveau de la zone 13 de chauffage.

Par exemple, le nid-d'abeilles 16 de chauffage peut comprendre des corrugations et/ ou des orifices. A titre d'exemple non limitatif, le nid d'abeilles 16 de chauffage comprend des feuillards ondulés avec des échancrures pour assurer un bon mélange des deux flux.

On prévoit aussi que les flux d'hydrocarbures et/ou d'eau sont liquides, auquel cas il est nécessaire que la zone 13 d'échange ait un rôle d'évaporateur.

La réaction de reformage est en effet réalisée pour des réactifs sous forme gazeuse.

Selon cette variante, les alvéoles du nid-d'abeilles 16 sont avantageusement très fines au moins au niveau des entrées 11 et/ou 11', pour permettre une évaporation rapide des flux liquides d'hydrocarbures et/ou d'eau.

Le nid-d'abeilles 16 de chauffage permet en outre que le flux en entrée de la zone 14 de reformage présente une bonne homogénéité.

Les nids-d'abeilles 16, 17 et 18 n'ont été donnés qu'à titre d'exemple et ne constituent en aucun cas une limitation du module 10 selon le premier aspect de l'invention. De manière générale, les différents nids-d'abeilles du module 10 peuvent avoir des tailles et des géométries d'alvéole différentes.

Avantageusement, mais non limitativement, le module 10 a une forme sensiblement parallélépipédique, de même que les nids-d'abeilles 16, 17 et 18, et le module 10 comprend des parois métalliques plus épaisses que les feuillards des nids-d'abeilles 16, 17 et 18, par exemple des parois d'acier réfractaire d'une épaisseur d'environ 1 mm.

A titre d'exemple non limitatif, les zones 13, 14 et 15 peuvent avoir des longueurs respectives d'environ 150 mm, 200 mm et 75 mm, le module ayant une largeur d'environ 100mm pour environ 10 mm d'épaisseur.

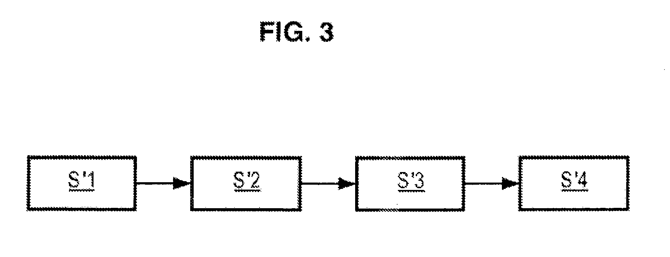

On a représenté sur la figure 3 un procédé de fabrication du module de reformage catalytique.

Le procédé comprend ainsi les étapes de :
- disposer S'1 un nid-d'abeilles 17 de reformage dans un manchon présentant une ouverture d'entrée et une ouverture de sortie, le nid-d'abeilles ainsi disposé laissant libre d'accès l'ouverture d'entrée et l'ouverture de sortie,
- déposer S'2 un catalyseur sur le nid-d'abeilles 17 de reformage,
- disposer S'3 un nid-d'abeilles 16 de chauffage dans le manchon au niveau de l'ouverture d'entrée, et
- disposer S'4 un nid-d'abeilles 18 de refroidissement dans le manchon au niveau de l'ouverture de sortie,
de sorte que le nid-d'abeilles 17 de reformage soit serré entre les nids-d'abeilles de chauffage 16 et de refroidissement 18.

Les étapes du procédé pourront être avantageusement effectuées dans l'ordre suivant : S'1 - S'2 - S'3 -S'4, les étapes S'1 et S'2 pouvant être inversées et les étapes S'3 et S'4 pouvant être également inversées.

Les étapes de disposition de nids-d'abeilles dans le manchon S'1, S'3 et S'4 sont préférentiellement - mais non limitativement - réalisées à force. Le manchon peut être composé d'acier réfractaire.

L'étape de dépôt S'2 de catalyseur sur le nid-d'abeilles 17 de reformage peut être réalisée par tout procédé connu de l'homme de l'art, par exemple par enduction ou passage d'un fluide visqueux contenant les éléments actif suivi de traitements thermiques.

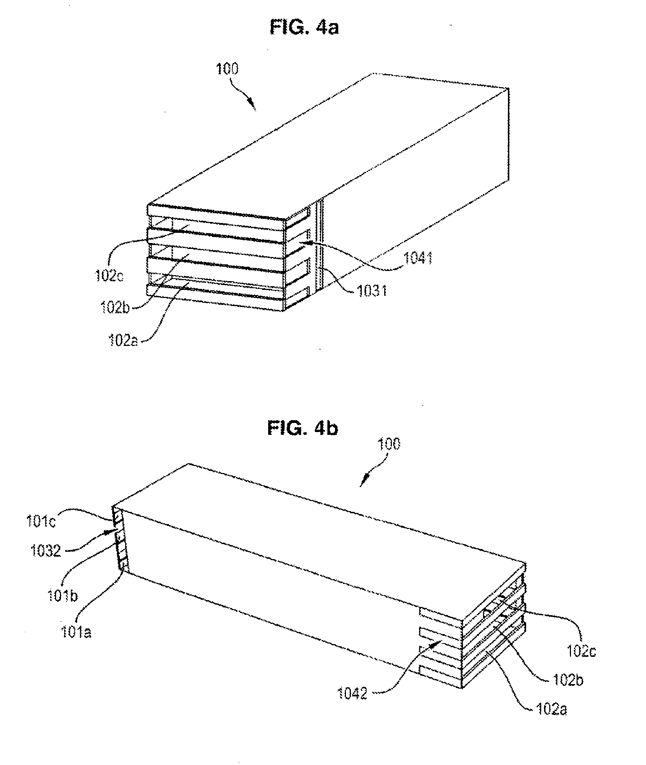

On va maintenant décrire, en regard des figures 4a à 6c, un dispositif de reformage catalytique selon le premier aspect de l'invention comprenant un nombre donné N de module(s) de reformage catalytique, avec N ≥ 2. Par exemple, pour alimenter une pile à combustible de 2000 W, il faudrait installer 3 modules.

Le dispositif selon le premier aspect de l'invention comprend un boitier 100 dans lequel est disposé au moins deux modules de reformage catalytique.

Dans la suite, on considérera - à titre d'exemple non limitatif - que le dispositif comprend 3 modules de reformage catalytique. La description qui suit s'adapte aisément à tout autre nombre de modules.

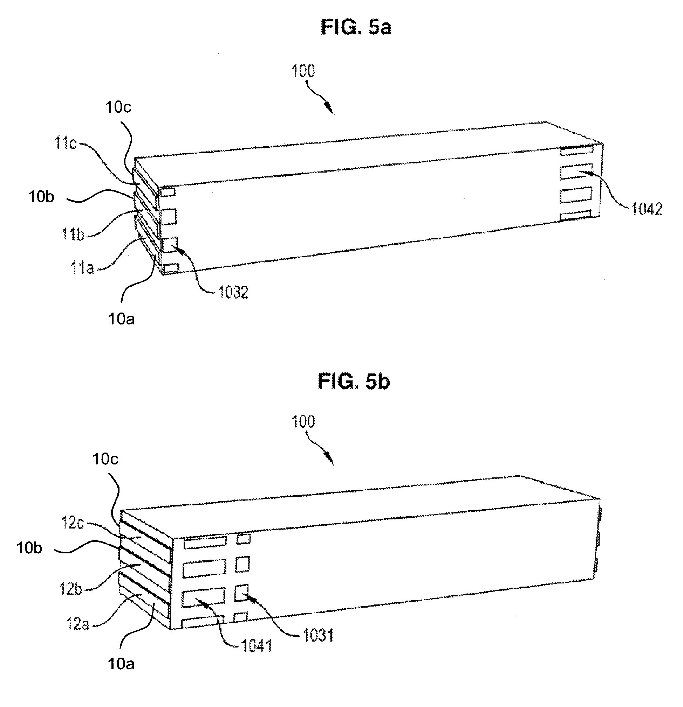

On a représenté sur les figures 4a et 4b un boitier 100 vide sous deux angles de vue en perspective différents, et sur les figures 5a et 5b le même boitier 100 dans lequel sont disposés trois modules 10a, 10b et 10c sous deux angles de vue en perspectives différents.

En regard également des figures 5a et 5b, le boitier 100 comprend, pour chaque module 10a, 10b, 10c, une voie 101 a, 101b, 101 c d'entrée de flux d'hydrocarbures et une voie 102a, 102b, 102c de sortie de flux de produit respectivement connectées à l'entrée 11a, 11b, 11c et à la sortie 12a, 12b, 12c du module.

Le boitier 100 comprend en outre une première entrée 1031 et une première sortie 1032 destinées respectivement à recevoir et à évacuer un fluide caloporteur, ainsi qu'une deuxième entrée 1041 et une deuxième sortie 1042 destinées respectivement à recevoir et à évacuer un fluide frigoporteur.

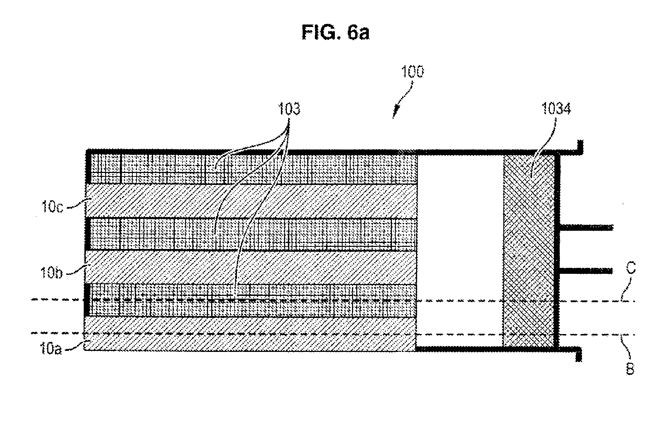

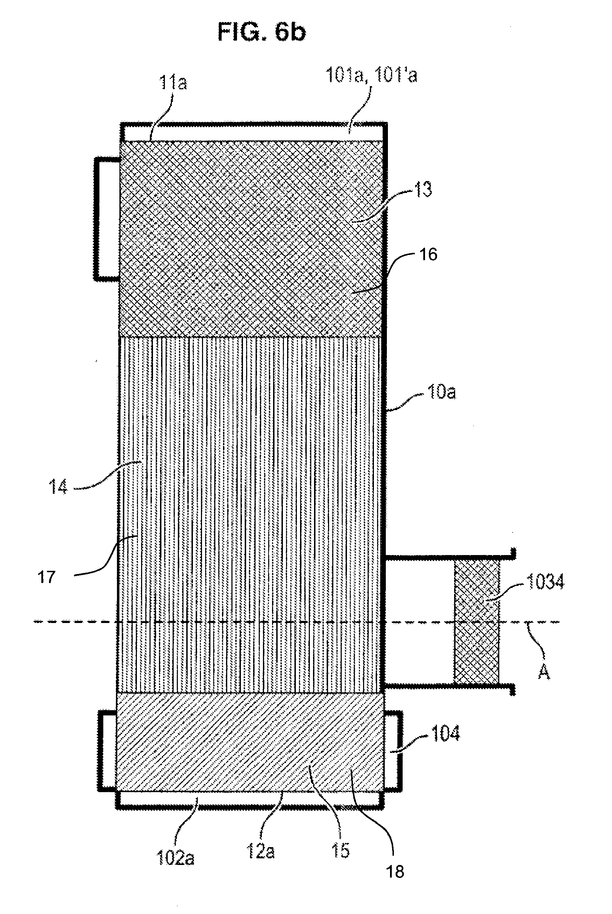

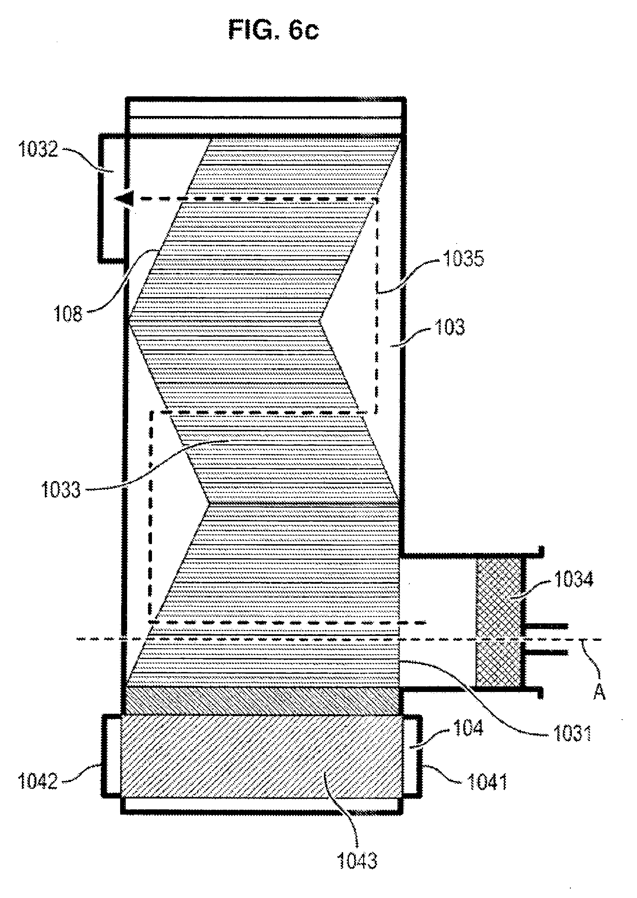

On a représenté sur les figures 6a à 6c un dispositif de reformage catalytique selon une réalisation possible du troisième aspect de l'invention, en coupe respectivement en vue de face (figure 6a, correspondant à la coupe A) et en vue de haut (figures 6b et 6c, correspondant aux coupes B et C).

Le dispositif comprend un circuit 103 caloporteur destiné à mettre en contact un fluide caloporteur avec une surface extérieure de la zone 13 de chauffage de chaque module 10a, 10b, 10c de reformage catalytique, et un circuit 104 frigoporteur destiné à mettre en contact un fluide frigoporteur avec une surface extérieure de la zone 15 de refroidissement de chaque module 10a, 10b, 10c de reformage catalytique.

Le circuit caloporteur 103, respectivement frigoporteur 104, est configuré pour permettre une circulation de fluide caloporteur, respectivement frigoporteur, entre la première entrée 1031 et la première sortie 1032, respectivement entre la deuxième entrée 1041 et la deuxième sortie 1042 du boitier 100.

Le fluide caloporteur peut être par exemple un mélange d'air et de combustible, ou bien le produit d'une oxydation catalytique ou thermique, ou tout fluide caloporteur connu de l'homme de l'art.

A titre d'exemple non limitatif, le circuit 103 caloporteur peut comprendre un réacteur d'oxydation thermique ou catalytique 1034 situé en amont de la première entrée 1031.

Selon une variante avantageuse, représentée à la figure 6c, le circuit 103 caloporteur comprend un ensemble 1033 de nids-d'abeilles. Ces nids-d'abeilles sont chacun disposés au contact d'une surface supérieure 19' ou d'une surface inférieure 19 d'un module 10a, 10b, 10c de reformage catalytique, et configurés pour permettre une circulation du fluide caloporteur selon le trajet de la flèche en traits pointillés 1035, de la première entrée 1031 vers la première sortie 1032.

L'ensemble 1033 de nids-d'abeilles permet un bon échange thermique entre le fluide caloporteur et les modules de reformage catalytique en jouant un rôle d'échangeur à ailettes.

A titre d'exemple non limitatif, l'ensemble 1033 présente une longueur d'environ 325 mm pour environ 100 mm de large et environ 15 mm de haut, et comprend des empilements de feuillards plats en WN 1.4767 d'épaisseur environ 200 microns avec une densité d'environ 50 cpsi.

Avantageusement, le fluide caloporteur circule au moins sur une partie du circuit 103 à contre-courant ou à courant croisé du flux d'hydrocarbures dans les modules 10a, 10b, 10c de reformage catalytique pour un meilleur transfert thermique.

Le circuit 103 permet un passage du fluide caloporteur sur une surface extérieure de la zone 13 de chauffage de chaque module 10a, 10b, 10c du dispositif selon le premier aspect de l'invention.

Selon une variante, le circuit 103 permet en outre le passage du fluide caloporteur sur une surface extérieure (20, 20') de la zone 14 de reformage de chaque module. Cette variante est particulièrement avantageuse pour un reformage catalytique à la vapeur, qui nécessite un apport calorifique au niveau de la zone 14 de reformage.

Ceci n'est pas nécessaire pour réaliser un reformage autotherme. Dans ce cas, le catalyseur est avantageusement spécifique ATR, et les voies d'entrées 101 a, 101b, 101 c sont en outre destinées à recevoir un flux d'air, réactif nécessaire au reformage autotherme. Le flux d'air peut aussi être mélangé en amont au flux d'hydrocarbure ou au flux d'eau. L'air peut être enrichi en oxygène.

Avantageusement, le module comprend alors un isolant thermique sur une surface extérieure de la zone de reformage, de sorte à ne pas perdre de chaleur inutilement.

Selon un mode de réalisation possible du dispositif, le fluide frigoporteur est un fluide intervenant comme réactif dans la réaction de reformage. Cela permet ainsi de préchauffer ce fluide.

Selon une variante préférentielle - mais non limitative - non représentée de ce mode de réalisation, le fluide frigoporteur peut comprendre au moins une partie du flux d'eau et/ou du flux d'hydrocarbures en amont des voies d'entrées 101 a, 101b, 101 c du dispositif.

Selon une autre variante non représentée de ce mode de réalisation, le fluide frigoporteur peut être constitué d'un mélange du flux d'hydrocarbures et d'eau au niveau de la zone 13 de chauffage et/ou de la zone 14 de reformage des modules 10a, 10b, 10c. Dans ce cas, le dispositif comprend un échangeur thermique pour permettre le transfert de chaleur du flux de produit vers le flux d'hydrocarbures assurant ainsi à la fois la fonction de chauffage en entrée et de refroidissement en sortie. Dans ce cas, le flux de produit constitue - au moins partiellement - le fluide caloporteur.

Avantageusement, le circuit 104 frigoporteur comprend un ensemble 1043 de nids-d'abeilles, chacun disposé au contact d'une surface supérieure 21' ou d'une surface inférieure 21 d'un module 10a, 10b, 10c de reformage catalytique.

A titre d'exemple non limitatif, l'ensemble 1043 présente une longueur d'environ 105 mm pour environ 50 mm de large et environ 15 mm de haut. Il comprend des empilements de feuillards ondulés et de feuillards plats en WN 1.4767 d'épaisseur environ 100 microns et avec une densité d'environ 400 cpsi.

En référence à la figure 6b, le boitier 100 comprend avantageusement, pour chaque module 10a de reformage catalytique, une voie d'entrée auxiliaire 101'a, destinée à recevoir un flux d'eau connectée à l'entrée 11'a spécifique pour l'eau du module.

L'eau est alors avantageusement pulvérisée sous forme de fines gouttelettes pour éviter un phénomène de ruissellement néfaste à la circulation des flux en entrée des modules de reformage catalytique.

Le module 10 selon le premier aspect de l'invention est destiné à traiter un débit donné de flux d'hydrocarbures.

Le dispositif permet ainsi, en choisissant le nombre donné de modules de reformage catalytique, de traiter un débit choisi d'hydrocarbures.

On bénéficie ainsi d'un dispositif compact optimisé construit à partir de modules de reformage.

Préférentiellement, mais non limitativement, le dispositif est isolé par un isolant, par exemple un isolant microporeux ou nanoporeux. On entend par isolant microporeux ou nanoporeux un matériau dont la porosité est de taille inférieure au libre parcours moyen des molécules de l'air.

Par exemple, le boitier 100 peut comprendre sur une surface extérieure des plaques d'isolants en silice ou en céramique.

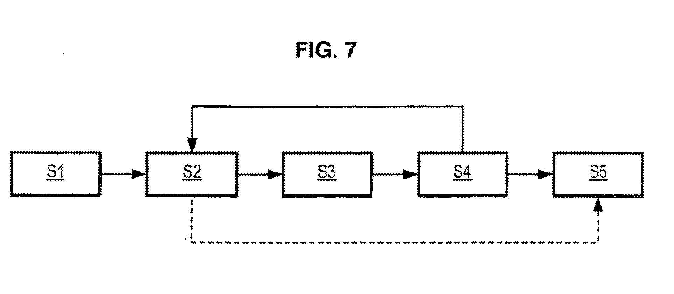

On va maintenant décrire, en regard de la figure 7, un procédé de fabrication du dispositif comprenant N modules de reformage, conformément au second aspect de l'invention.

Le procédé de fabrication comprend les étapes (de préférence successives) de :
- fournir S1 un boitier 100 tel que décrit selon le troisième aspect de l'invention,
- disposer S2 un module 10 de reformage selon le premier aspect de l'invention dans le boitier 100, de sorte que l'entrée 11 et la sortie 12 du module 10 correspondent respectivement à une voie 101 d'entrée et à une voie 102 de sortie du boitier,
- déposer S3 un premier ensemble 1033 de nids-d'abeilles au contact d'une surface extérieure de la zone 13 de chauffage du module 10 de reformage catalytique, pour permettre une circulation de fluide caloporteur entre la première entrée 1031 et la première sortie 1032,
- déposer S4 un deuxième ensemble 1043 de nids-d'abeilles au contact d'une surface extérieure de la zone 15 de refroidissement du module 10 de reformage catalytique, pour permettre une circulation de fluide frigoporteur entre la deuxième entrée 1041 et la deuxième sortie 1042.

On obtient ainsi une structure dans le boitier 100 composée d'un module 10 selon le premier aspect de l'invention et de nids-d'abeilles destinées aux transferts thermiques au niveau de la zone de chauffage et de la zone de refroidissement. On itère alors les étapes S2, S3 et S4 jusqu'à avoir N modules de reformage catalytique déposés dans le boitier 100.

Eventuellement, on prévoit de ne pas itérer une N-ième fois les étapes S3 et S4, de sorte que le boitier contient après les itérations N modules et (N-1) premiers ensembles, respectivement deuxièmes ensembles, de nids-d'abeilles. Ceci est représenté par la flèche en traits pointillés sur la figure 7.

Ainsi, au moins une surface supérieure ou inférieure de chaque module est en contact avec un premier ensemble de nids-d'abeilles et un deuxième ensemble de nids-d'abeilles.

Le procédé comprend alors l'étape d'établir S5 des liaisons étanches entre :
- le boitier 100 et les modules de reformage catalytique déposés dans le boitier 100 au niveau des voies 101 d'entrée et des voies 102 de sortie,
- le boitier 100 et le premier ensemble 1033 de nids-d'abeilles au niveau de la première entrée 1031 et de la première sortie 1032, et
- le boitier 100 et le deuxième ensemble 1043 de nids-d'abeilles au niveau de la deuxième entrée 1041 et de la deuxième sortie 1042.

Les liaisons étanches peuvent être réalisées par soudure, par brasure, ou par tout moyen adapté connu de l'homme de l'art.

L'invention permet ainsi la fabrication d'un dispositif de reformage catalytique modulaire sans soudure nécessaire au niveau de la zone de reformage comprenant le catalyseur. Les liaisons étanches sont établies au niveau des voies d'entrée 101 et de sortie 102 du dispositif, c'est-à-dire à proximité des zones de chauffage 13 et de refroidissement 15 de chaque module, la zone de reformage étant protégée des dégradations dues à l'établissement de la liaison étanche.

On va maintenant décrire, à titre d'exemple, des conditions de fonctionnement du dispositif de reformage catalytique selon le premier aspect de l'invention.

Dans cet exemple, on envisage un reformage catalytique à la vapeur.

Le dispositif reçoit un débit d'eau pulvérisée de 1,86 L/h, et un débit de propane 0,5 kg/h sous la forme d'un mélange diphasique.

Le mélange passe par le module de refroidissement pour refroidir le produit en sortie, et en ressort à une température d'environ 100°C pour être acheminé vers les voies d'entrée 101 du dispositif de reformage catalytique.

Le mélange est introduit dans la zone 13 de chauffage des modules 10 où il atteint une température d'environ 415°C, en entrée de la zone 14 de reformage.

Dans la zone de reformage, la température monte à 670°C, le flux de produit refroidit ensuite dans la zone 15 de refroidissement des modules 10.

Le flux de produit a un débit de 4 N.m³/h et se compose d'environ 49% d'hydrogène, 31% de vapeur d'eau, 10% de dioxyde de carbone, 8% de monoxyde de carbone et 2% de méthane. Sa température est d'environ 230°C.

Ce produit est ensuite converti au cours d'une deuxième étape de reformage pour obtenir un mélange concentré à 72% d'hydrogène à 3 N.m³/h pour alimenter une pile à combustible de 2kW.

Une partie du mélange concentré n'est pas consommée et est oxydée par le dispositif 1034 pour alimenter le circuit 103 caloporteur.

## Revendications

1. Dispositif de reformage catalytique pour convertir des hydrocarbures en un produit comprenant de l'hydrogène, le dispositif étant **caractérisé en ce qu'**il comprend :
- un boîtier (100),
- au moins deux modules (10a, 10b, 10c) de reformage catalytique disposés dans le boîtier (100) comprenant chacun :
o une entrée (11) destinée à recevoir un flux d'hydrocarbures,
o une sortie (12) destinée à évacuer un flux de produit comprenant de l'hydrogène,
o une zone (13) de chauffage, adjacente à l'entrée (11), dans laquelle est disposé un nid-d'abeilles (16) de chauffage,
o une zone (15) de refroidissement, adjacente à la sortie (12), dans laquelle est disposé un nid-d'abeilles (18) de refroidissement, et
o une zone (14) de reformage, comprise entre la zone (13) de chauffage et la zone (15) de refroidissement, dans laquelle est disposé un nid-d'abeilles (17) de reformage comportant un catalyseur,
le boîtier (100) comprenant, pour chaque module (10a, 10b, 10c) de reformage catalytique, une voie (101a, 101b, 101c) d'entrée de flux d'hydrocarbures et une voie (102a, 102b, 102c) de sortie de flux de produit comprenant de l'hydrogène respectivement connectées à l'entrée (11a, 11b, 11 c) et à la sortie (12a, 12b, 12c),
- un circuit (103) caloporteur destiné à mettre en contact un fluide caloporteur avec une surface extérieure de la zone (13) de chauffage de chaque module (10a, 10b, 10c) de reformage catalytique, et
- un circuit (104) frigoporteur destiné à mettre en contact un fluide frigoporteur avec une surface extérieure de la zone (15) de refroidissement de chaque module (10a, 10b, 10c) de reformage catalytique.

2. Dispositif selon la revendication 1, **caractérisé en ce que** les modules (10a, 10b, 10c) de reformage catalytique comprennent chacun une entrée (11') auxiliaire destinée à recevoir un flux d'eau, le nid-d'abeilles (16) de chauffage comprenant des moyens permettant un mélange entre les flux d'eau et d'hydrocarbures au niveau de la zone (13) de chauffage.

3. Dispositif selon la revendication 1 ou 2, dans lequel chaque module (10a, 10b, 10c) comprend une surface inférieure (19) et/ou une surface supérieure (19') de la zone (13) de chauffage, le circuit (103) caloporteur comprenant un ensemble (1033) de nids-d'abeilles, chacun disposé au contact d'une surface supérieure (19') ou d'une surface inférieure (19) d'un module (10a, 10b, 10c) de reformage catalytique.

4. Dispositif selon l'une des revendications 1 à 3, dans lequel chaque module (10a, 10b, 10c) comprend une surface inférieure (21) et/ou une surface supérieure (21') de la zone (15) de refroidissement, le circuit (104) frigoporteur comprenant un ensemble (1043) de nids-d'abeilles, chacun disposé au contact d'une surface supérieure (21') ou d'une surface inférieure (21) d'un module (10a, 10b, 10c) de reformage catalytique.

5. Dispositif selon l'une des revendications 1 à 4, dans lequel le boîtier (100) comprend en outre, pour chaque module (10a) de reformage catalytique, une voie d'entrée auxiliaire (101'a) destinée à recevoir un flux d'eau connectée à une entrée (11'a) du module (10a) de reformage catalytique.

6. Dispositif selon l'une des revendications 1 à 5, dans lequel le catalyseur est un catalyseur spécifique SR, et dans lequel le circuit (103) caloporteur est en outre destiné à mettre en contact un fluide caloporteur avec une surface extérieure de la zone (14) de reformage de chaque module (10a, 10b, 10c) de reformage catalytique, pour réaliser un reformage catalytique à la vapeur.

7. Dispositif selon l'une des revendications 1 à 6, dans lequel le catalyseur est un catalyseur spécifique ATR, et dans lequel les voies d'entrée (101 a, 101 b, 101c) sont en outre destinées à recevoir un flux d'air, pour réaliser un reformage catalytique autotherme.

8. Procédé de fabrication d'un dispositif de reformage catalytique, comprenant les étapes successives de :
- fournir (S1) un boîtier (100) comprenant un nombre donné N de voies (101) d'entrée et de voies (102) de sortie, avec N ≥ 2, une première entrée (1031) et une première sortie (1032) destinées respectivement à recevoir et à évacuer un fluide caloporteur, une deuxième entrée (1041) et une deuxième sortie (1042) destinées respectivement à recevoir et à évacuer un fluide frigoporteur,
- disposer (S2) un module (10) de reformage catalytique comprenant :
o une entrée (11) destinée à recevoir un flux d'hydrocarbures,
o une sortie (12) destinée à évacuer un flux de produit comprenant de l'hydrogène,
o une zone (13) de chauffage, adjacente à l'entrée (11), dans laquelle est disposé un nid-d'abeilles (16) de chauffage,
o une zone (15) de refroidissement, adjacente à la sortie (12), dans laquelle est disposé un nid-d'abeilles (18) de refroidissement, et
o une zone (14) de reformage, comprise entre la zone (13) de chauffage et la zone (15) de refroidissement, dans laquelle est disposé un nid-d'abeilles (17) de reformage comportant un catalyseur,
de sorte que l'entrée (11) et la sortie (12) du module (10) correspondent respectivement à une voie (101) d'entrée et à une voie (102) de sortie du boîtier,
- déposer (S3) un premier ensemble (1033) de nids-d'abeilles au contact d'une surface extérieure de la zone (13) de chauffage du module (10) de reformage catalytique, le premier ensemble (1033) de nids-d'abeilles étant configuré pour permettre une circulation de fluide caloporteur entre la première entrée (1031) et la première sortie (1032),
- déposer (S4) un deuxième ensemble (1043) de nids-d'abeilles au contact d'une surface extérieure de la zone (15) de refroidissement du module (10) de reformage catalytique, le deuxième ensemble (1043) de nids-d'abeilles étant configuré pour permettre une circulation de fluide frigoporteur entre la deuxième entrée (1041) et la deuxième sortie (1042),
les étapes (S3) et (S4) pouvant être inversées,
- itérer les étapes de disposition (S2) d'un module de reformage catalytique, de déposition (S3) d'un premier ensemble (1033) de nids-d'abeilles et de déposition (S4) d'un second ensemble (1043) de nids-d'abeilles jusqu'à avoir N modules de reformage catalytique déposés dans le boitier (100),
- établir (S5) des liaisons étanches entre :
■ le boîtier (100) et les modules de reformage catalytique déposés dans le boîtier (100) au niveau des voies (101) d'entrée et des voies (102) de sortie,
■ le boîtier (100) et le premier ensemble (1033) de nids-d'abeilles au niveau de la première entrée (1031) et de la première sortie (1032), et
■ le boîtier (100) et le deuxième ensemble (1043) de nids-d'abeilles au niveau de la deuxième entrée (1041) et de la deuxième sortie (1042).

9. Procédé selon la revendication 8, **caractérisé en ce que** les étapes (S3) et (S4) ne sont pas réitérées une N-ième fois.

## Patentansprüche

1. Vorrichtung zur katalytischen Reformierung zur Umwandlung von Kohlenwasserstoffen in ein wasserstoffhaltiges Produkt, wobei die Vorrichtung **dadurch gekennzeichnet ist, dass** sie umfasst:
ein Gehäuse (100),
wenigstens zwei Module (10a, 10b, 10c) zur katalytischen Reformierung, welche in dem Gehäuse (100) angeordnet sind und jeweils umfassen:
o einen Eingang (11), welcher dazu bestimmt ist, einen Strom von Kohlenwasserstoffen aufzunehmen,
o einen Ausgang (12), welcher dazu bestimmt ist, einen Strom des wasserstoffhaltigen Produkts auszuleiten,
o eine an den Eingang (11) angrenzende Erhitzungszone (13), in welcher eine Heizwabe (16) angeordnet ist,
o eine an den Ausgang (12) angrenzende Abkühlungszone (15), in welcher eine Kühlwabe angeordnet ist,
o eine zwischen der Erhitzungszone (13) und der Abkühlungszone (15) angeordnete Reformierungszone (14), in welcher eine Reformierungswabe (17), welche einen Katalysator beinhaltet, angeordnet ist,
wobei das Gehäuse (100) für jedes Modul (10a, 10b, 10c) zur katalytischen Reformierung einen Eingangsweg (101a, 101b, 101c) für den Kohlenwasserstoffstrom und einen Ausgangsweg (102a, 102b, 102c) für den Strom des wasserstoffhaltigen Produkts umfasst, die jeweils mit dem Eingang (11a, 11b, 11c) bzw. dem Ausgang (12a, 12b, 12c) verbunden sind,
- einen Wärmeübertragungskreislauf (103), welcher dazu bestimmt ist, ein Wärmeübertragungsfluid mit einer äußeren Oberfläche der Erhitzungszone (13) jedes Moduls (10a, 10b, 10c) zur katalytischen Reformierung in Kontakt zu bringen, und
- einen Kälteübertragungskreislauf (104), welcher dazu bestimmt ist, ein Kälteübertragungsfluid mit einer äußeren Oberfläche der Abkühlungszone (15) jedes Moduls (10a, 10, 10c) zur katalytischen Reformierung in Kontakt zu bringen.

2. Vorrichtung gemäß Anspruch 1, **dadurch gekennzeichnet, dass** die Module (10a, 10b, 10c) zur katalytischen Reformierung jeweils einen Hilfseingang (11') umfassen, welcher dazu bestimmt ist, einen Wasserstrom aufzunehmen, wobei die Heizwabe (16) Mittel umfasst, welche eine Vermischung der Wasser- und Kohlenwasserstoffströme auf Höhe der Erhitzungszone (13) ermöglichen.

3. Vorrichtung gemäß Anspruch 1 oder 2, wobei jedes Modul (10a, 10b, 10c) eine untere Oberfläche (19) und/oder eine obere Oberfläche (19') der Erhitzungszone (13) umfasst, wobei der Wärmeübertragungskreislauf (103) eine Gesamtheit (1033) an Waben umfasst, die jeweils in Kontakt mit einer oberen Oberfläche (19') oder einer unteren Oberfläche (19) eines Moduls (10a, 10, 10c) zur katalytischen Reformierung angeordnet sind.

4. Vorrichtung gemäß einem der Ansprüche 1 bis 3, wobei jedes Modul (10a, 10b, 10c) eine untere Oberfläche (21) und/oder eine obere Oberfläche (21') der Abkühlungszone (15) umfasst, wobei der Kälteübertragungskreislauf (104) eine Gesamtheit (1043) an Waben umfasst, die jeweils in Kontakt mit einer oberen Oberfläche (21') oder einer unteren Oberfläche (21) eines Moduls (10a, 10, 10c) zur katalytischen Reformierung angeordnet sind.

5. Vorrichtung gemäß einem der Ansprüche 1 bis 4, wobei das Gehäuse (100) des Weiteren für jedes Modul (10a) zur katalytischen Reformierung einen Hilfseingangsweg (101'a) umfasst, welcher dazu bestimmt ist, einen Wasserstrom aufzunehmen, und der mit einem Eingang (11a') des Moduls (10a) zur katalytischen Reformierung verbunden ist.

6. Vorrichtung gemäß einem der Ansprüche 1 bis 5, wobei der Katalysator ein spezifischer Katalysator für SR (Dampfreformierung) ist, und wobei der Wärmeübertragungskreislauf (103) außerdem dazu bestimmt ist, ein Wärmeübertragungsfluid mit einer äußeren Oberfläche der Reformierungszone (14) jedes Moduls (10a, 10b, 10c) zur katalytischen Reformierung in Kontakt zu bringen, um eine katalytische Dampfreformierung zu durchzuführen.

7. Vorrichtung gemäß einem der Ansprüche 1 bis 6, wobei der Katalysator ein spezifischer Katalysator für ATR (autotherme Reformierung) ist, und wobei die Eingangswege (101a, 101b, 101c) außerdem dazu bestimmt sind, einen Luftstrom aufzunehmen, um eine autotherme katalytische Reformierung durchzuführen.

8. Verfahren zur Herstellung einer Vorrichtung zur katalytischen Reformierung, umfassend die aufeinander folgenden Schritte:
- Bereitstellen (S1) eines Gehäuses, welches eine gegebene Anzahl N an Einganswegen (101) und Ausgangswegen (102), wobei N ≥ 2 ist, einen ersten Eingang (1031) und einen ersten Ausgang (1032), welche jeweils dazu bestimmt sind, ein Wärmeübertragungsfluid aufzunehmen bzw. abzuleiten, einen zweiten Eingang (1041) und einen zweiten Ausgang (1042), welche jeweils dazu bestimmt sind, ein Kälteübertragungsfluid aufzunehmen bzw. abzuleiten, umfasst,
- Anordnen (S2) eines Moduls (10) zur katalytischen Reformierung, umfassend:
o einen Eingang (11), welcher dazu bestimmt ist, einen Strom von Kohlenwasserstoffen aufzunehmen,
o einen Ausgang (12), welcher dazu bestimmt ist, einen Strom des wasserstoffhaltigen Produkts auszuleiten,
o eine an den Eingang (11) angrenzende Erhitzungszone (13), in welcher eine Heizwabe (16) angeordnet ist,
o eine an den Ausgang (12) angrenzende Abkühlungszone (15), in welcher eine Kühlwabe angeordnet ist,
o eine zwischen der Erhitzungszone (13) und der Abkühlungszone (15) angeordnete Reformierungszone (14), in welcher eine Reformierungswabe (17), welche einen Katalysator beinhaltet, angeordnet ist,
derart, dass der Eingang (11) und der Ausgang (12) des Moduls (10) jeweils einem Eingangsweg (101) bzw. einem Ausgangsweg (102) des Gehäuses entsprechen,
- Anordnen (S3) einer ersten Gesamtheit (1033) an Waben in Kontakt mit einer äußeren Oberfläche der Erhitzungszone (13) des Moduls (10) zur katalytischen Reformierung, wobei die erste Gesamtheit (1033) an Waben konfiguriert ist, um eine Zirkulation des Wärmeübertragungsfluids zwischen dem ersten Eingang (1031) und dem ersten Ausgang (1032) zu ermöglichen,
- Anordnen (S4) einer zweiten Gesamtheit (1043) an Waben in Kontakt mit einer äußeren Oberfläche der Abkühlungszone (15) des Moduls (10) zur katalytischen Reformierung, wobei die zweite Gesamtheit (1043) an Waben konfiguriert ist, um eine Zirkulation des Kälteübertragungsfluids zwischen dem zweiten Eingang (1041) und dem zweiten Ausgang (1042) zu ermöglichen,
wobei die Schritte (S3) und (S4) umgekehrt sein können,
- Wiederholen der Schritte der Anordnung (S2) eines Moduls zur katalytischen Reformierung, der Anordnung (S3) einer ersten Gesamtheit (1033) an Waben und der Anordnung (S4) einer zweiten Gesamtheit (1043) an Waben bis zur Anordnung von N Modulen zur katalytischen Reformierung in dem Gehäuse (100),
- Etablieren (S5) von um dur lässige Verbindungen zwischen:
■ dem Gehäuse (100) und den Modulen zu katalytischen Reformierung, die in dem Gehäuse (100) angeordnet sind, auf Höhe der Eingangswege (101) und der Ausgangswege (102),
■ dem Gehäuse (100) und der ersten Gesamtheit (1033) an Waben auf Höhe des ersten Eingangs (1031) und des ersten Ausgangs (1032), und
■ dem Gehäuse (100) und der zweiten Gesamtheit (1043) an Waben auf Höhe des zweiten Eingangs (1041) und des zweiten Ausgangs (1042).

9. Verfahren gemäß Anspruch 8, **dadurch gekennzeichnet, dass** die Schritte (S3) und (S4) nicht ein N-tes Mal wiederholt werden.

## Claims

1. A catalytic reforming device for converting hydrocarbons into a product comprising hydrogen, the device being **characterised in that** it comprises:
- a housing (100),
- at least two catalytic reforming modules (10a, 10b, 10c) arranged in the housing (100) each comprising:
- an inlet (11) for receiving a stream of hydrocarbons,
- an outlet (12) for discharging a stream of product comprising hydrogen,
- a heating area (13), adjacent to the inlet (11), and in which a heating honeycomb (16) is arranged,
- a cooling area (15), adjacent to the outlet (12), in which a cooling honeycomb (18) is arranged, and
- a reforming area (14), between the heating area (13) and the cooling area (15), in which a reforming honeycomb (17) comprising a catalyst is arranged,
the housing (100) comprising, for each catalytic reforming module (10a, 10b, 10c), inlet channel (101a, 101b, 101c) for stream of hydrocarbons and outlet channel (102a, 102b, 102c) for stream of product comprising hydrogen respectively connected to the inlet (11a, 11b, 11c) and to the outlet (12a, 12b, 12c),
- a heat transfer system (103) for placing a heat transfer medium in contact with an outer surface of the heating area (13) of each catalytic reforming module (10a, 10b, 10c), and
- a cooling system (104) for placing a coolant in contact with an outer surface of the cooling area (15) of each catalytic reforming module (10a, 10b, 10c).

2. The device according to claim 1, **characterised in that** the catalytic reforming modules (10a, 10b, 10c) each include an auxiliary inlet (11') for receiving a stream of water, the heating honeycomb (16) comprising means for allowing a mixing between the streams of water and of hydrocarbons at the level of the heating area (13).

3. The device according to claim 1 or 2, wherein each module (10a, 10b, 10c) comprises a lower surface (19) and/or an upper surface (19') of the heating area (13), the heating transfer system (103) comprising a set (1033) of honeycombs, each arranged in contact with an upper surface (19') or with a lower surface (19) of a catalytic reforming module (10a, 10b, 10c).

4. The device according to one of claims 1 to 3, wherein each module (10a, 10b, 10c) comprises a lower surface (21) and/or an upper surface (21') of the cooling area (15), the coolant system (104) comprising a set (1043) of honeycombs, each arranged in contact with an upper surface (21') or with a lower surface (21) of a catalytic reforming module (10a, 10b, 10c).

5. The device according to one of claims 1 to 4, wherein the housing (100) further comprises, for each catalytic reforming module (10a), an auxiliary inlet channel (101'a) for receiving a stream of water connected to an inlet (11'a) of the catalytic reforming module (10a).

6. The device according to one of claims 1 to 5, wherein the catalyst is a specific catalyst SR, and wherein the heat transfer system (103) is furthermore for placing a heat transfer medium in contact with an outer surface of the reforming area (14) of each catalytic reforming module (10a, 10b, 10c), in order to carry out a catalytic steam reforming.

7. The device according to one of claims 1 to 6, wherein the catalyst is a specific catalyst ATR, and wherein the inlet channels (101a, 101b, 101c) are furthermore for receiving a stream of air, in order to carry out an catalytic autothermal reforming.

8. A method for manufacturing a catalytic reforming device, comprising the successive steps of:
- providing (S1) a housing (100) comprising a given number N of inlet channels (101) and of outlet channels (102), with N ≥ 2, a first inlet (1031) and a first outlet (1032) for respectively receiving and discharging a heat transfer medium, a second inlet (1041) and a second outlet (1042) for respectively receiving and discharging a coolant,
- arranging (S2) a catalytic reforming module (10) comprising:
- an inlet (11) for receiving a stream of hydrocarbons,
- an outlet (12) for discharging a stream of product comprising hydrogen,
- a heating area (13), adjacent to the inlet (11), in which a heating honeycomb (16) is arranged,
- a cooling area (15), adjacent to the outlet (12), in which a cooling honeycomb (18) is arranged, and
- a reforming area (14), between the heating area (13) and the cooling area (15), in which a reforming honeycomb (17) comprising a catalyst is arranged,
in such a way that the inlet (11) and the outlet (12) of the module (10) correspond respectively to an inlet channel (101) and to an outlet channel (102) of the housing,
- arranging (S3) a first set (1033) of honeycombs in contact with an outer surface of the heating area (13) of the catalytic reforming module (10), with the first set (1033) of honeycombs being configured to allow for a circulation of heat transfer medium between the first inlet (1031) and the first outlet (1032),
- arranging (S4) a second set (1043) of honeycombs in contact with an outer surface of the cooling area (15) of the catalytic reforming module (10), with the second set (1043) of honeycombs being configured to allow for a circulation of coolant between the second inlet (1041) and the second outlet (1042),
with the steps (S3) and (S4) able to be inversed,
- iterating the steps of arranging (S2) a catalytic reforming module, of arranging (S3) a first set (1033) of honeycombs and of arranging (S4) a second set (1043) of honeycombs until having N catalytic reforming modules arranged in the housing (100),
- establishing (S5) sealed connections between:
- the housing (100) and the catalytic reforming modules arranged in the housing (100) at the level of inlet channels (101) and outlet channels (102),
- the housing (100) and the first set (1033) of honeycombs at the level of the first inlet (1031) and the first outlet (1032), and
- the housing (100) and the second set (1043) of honeycombs at the level of the second inlet (1041) and the second outlet (1042).

9. The method according to claim 8, **characterised in that** the steps (S3) and (S4) are not reiterated an N-th time.
